# EUROPÄISCHE PATENTSCHRIFT

(11) **EP 2 448 986 B1**
(45) Veröffentlichungstag und Bekanntmachung des Hinweises auf die Patenterteilung: **20.11.2013**
(21) Anmeldenummer: 10726097.8
(22) Anmeldetag: 24.06.2010
(51) Int. Cl.: C08G 18/10, C08G 18/12, C08G 18/32, C08G 18/64, C08G 18/65, C08J 9/28

(54) **PORÖSE GELE AUF BASIS VON AROMATISCHEM POLYHARNSTOFF**
POROUS GELS BASED ON AROMATIC POLYUREA
GELS POREUX À BASE DE POLYURÉE AROMATIQUE

(30) Priorität: 29.06.2009 EP 09164027
(43) Veröffentlichungstag der Anmeldung: 09.05.2012
(73) Patentinhaber: BASF SE, 67056 Ludwigshafen (DE)
(72) Erfinder: FRICKE, Marc, 49090 Osnabrück (DE); SCHÄDLER, Volker, Ann Arbor Michigan 48104 (US)
(86) Internationale Anmeldenummer: PCT/EP2010/058992
(87) Internationale Veröffentlichungsnummer: WO 2011/000771

(56) Entgegenhaltungen:
- WO-A1-95/02009
- WO-A1-2008/138978
- WO-A1-2009/027310

## Beschreibung

Die Erfindung betrifft ein poröses Gel enthaltend folgende Komponenten in umgesetzter Form:
(a1) mindestens ein mehrfunktionelles Isocyanat,
(a2) mindestens ein mehrfunktionelles aromatisches Amin und
(a3) mindestens ein Polyalkylenpolyamin.

Weiterhin betrifft die Erfindung ein Verfahren zur Herstellung von porösen Gelen, die so erhältlichen porösen Gele sowie die Verwendung der porösen Gele als Dämmstoff und in Vakuumisolationspaneelen.

Poröse Gele mit Poren im Größenbereich von wenigen Mikrometern oder deutlich darunter und einer hohen Porosität von mindestens 70 % sind aufgrund theoretischer Überlegungen besonders gute Wärmeisolatoren.

Solche porösen Gele mit kleinem mittlerem Porendurchmesser können beispielsweise als organische Xerogele vorliegen. In der Literatur wird der Begriff Xerogel nicht durchweg einheitlich verwendet. Im Allgemeinen wird unter einem Xerogel ein poröses Material verstanden, welches durch ein Sol-Gel-Verfahren hergestellt wurde, wobei die flüssige Phase durch Trocknung unterhalb der kritischen Temperatur und unterhalb des kritischen Drucks der flüssigen Phase ("subkritische Bedingungen") aus dem Gel entfernt wurde. Im Gegensatz hierzu spricht man im Allgemeinen von Aerogelen, wenn die Entfernung der fluiden Phase aus dem Gel unter überkritischen Bedingungen durchgeführt wurde.

Beim Sol-Gel-Verfahren wird zunächst ein Sol auf Basis einer reaktiven organischen Gelvorstufe hergestellt und danach das Sol durch eine vernetzende Reaktion zu einem Gel geliert. Um aus dem Gel ein poröses Material, beispielsweise ein Xerogel, zu erhalten, muss die Flüssigkeit entfernt werden. Dieser Schritt wird nachfolgend vereinfachend als Trocknung bezeichnet.

Die WO-95/02009 offenbart Isocyanat-basierte Xerogele, die insbesondere für Anwendungen im Bereich der Vakuumisolation geeignet sind. Die Publikationsschrift offenbart zudem ein Sol-Gel-basiertes Verfahren zur Herstellung der Xerogele, wobei bekannte, unter anderem aromatische Polyisocyanate sowie ein unreaktives Lösungsmittel zum Einsatz kommen. Als weitere Verbindungen mit aktiven H-Atomen werden aliphatische oder aromatische Polyamine oder Polyole eingesetzt. Die in der Publikationsschrift offenbarten Beispiele umfassen solche, in denen ein Polyisocyanat mit Diaminodiethyltoluol umgesetzt wird. Die offenbarten Xerogele weisen generell mittlere Porengrößen im Bereich von 50 µm auf. In einem Beispiel wird ein mittlerer Porendurchmesser von 10 µm genannt.

Aus der WO2008/138978 sind Xerogele enthaltend von 30 bis 90 Gew.-% mindestens eines mehrfunktionellen Isocyanats und von 10 bis 70 Gew.-% mindestens eines mehrfunktionellen aromatischen Amins bekannt, deren volumengewichteter mittlere Porendurchmesser höchstens 5 Mikrometer beträgt.

Die Materialeigenschaften, insbesondere die mechanische Stabilität der bekannten porösen Gele auf Basis von Polyharnstoff sind jedoch nicht für alle Anwendungen ausreichend. Zudem zeigen die zugrundeliegenden Formulierungen bei der Trocknung unter subkritischen Bedingungen eine Schrumpfung unter Verringerung der Porosität und zeigen eine geringe Gelierungsgeschwindigkeit.

Es bestand daher die Aufgabe, ein poröses Gel zur Verfügung zu stellen, das die vorgenannten Nachteile nicht oder in geringerem Maße aufweist. Darüber hinaus sollten die porösen Gele auch bei Drücken oberhalb des Vakuumbereiches, insbesondere in einem Druckbereich von ungefähr 1 mbar bis ungefähr 100 mbar eine geringe thermische Leitfähigkeit aufweisen. Dies ist wünschenswert, da in Vakuumpaneelen im Laufe der Zeit eine Druckzunahme erfolgt. Insbesondere sollte das poröse Gel eine hohe Porosität und eine ausreichend hohe mechanische Stabilität aufweisen. Darüber hinaus sollten die porösen Gele eine geringe Entflammbarkeit und eine hohe Temperaturbeständigkeit aufweisen.

Eine weitere Aufgabe bestand darin, ein Verfahren zur Verfügung zu stellen, das ein poröses Gel mit geringer Porengröße, hoher Porosität und gleichzeitig hoher mechanischer Stabilität zugänglich macht. Zudem sollte das Verfahren zur Herstellung der poröse Gele poröse Gele mit einer geringen thermischen Leitfähigkeit zur Verfügung stellen und bei der Entfernung des Lösungsmittels unter subkritischen Bedingungen zu einer geringen Schrumpfung führen.

Demgemäß wurden die erfindungsgemäßen poröse Gele und das erfindungsgemäße Verfahren zur Herstellung von porösen Gelen gefunden.

Bevorzugte Ausführungsformen sind den Ansprüchen und der Beschreibung zu entnehmen. Kombinationen bevorzugter Ausführungsformen verlassen nicht den Rahmen dieser Erfindung.

### Poröse Gele

Erfindungsgemäß enthält das poröse Gel folgende Komponenten in umgesetzter Form:
(a1) mindestens ein mehrfunktionelles Isocyanat,
(a2) mindestens ein mehrfunktionelles aromatisches Amin und
(a3) mindestens ein Polyalkylenpolyamin.

Ein poröses Gel ist im Rahmen der vorliegenden Erfindung ein Material, welches porös ist und mittels eines Sol-Gel-Verfahrens erhalten wird. Das erfindungsgemäße poröse Gel liegt im Rahmen der vorliegenden Erfindung als Xerogel oder als Aerogel vor. Vorzugsweise liegt das erfindungsgemäße poröse Gel im Rahmen der vorliegenden Erfindung als Xerogel vor.

Unter einem Xerogel wird im Rahmen der vorliegenden Erfindung ein poröses Gel mit einer Porosität von mindestens 70 Vol.-% und einem volumengemittelten mittleren Porendurchmesser von höchstens 50 Mikrometer verstanden, welches durch ein Sol-Gel-Verfahren hergestellt wurde, wobei die flüssige Phase durch Trocknen unterhalb der kritischen Temperatur und unterhalb des kritischen Drucks der flüssigen Phase ("subkritische Bedingungen") aus dem Gel entfernt wurde.

Im Gegensatz wird unter Aerogel ein entsprechendes poröses Gel verstanden, wenn die Entfernung der fluiden Phase aus dem Gel unter überkritischen Bedingungen durchgeführt wurde.

Bei der Entfernung der fluiden Phase aus dem Gel wirken Kapillarkräfte, welche die Porenstruktur des resultierenden porösen Gels beeinflussen. Bei der Entfernung der fluiden Phase aus dem Gel unter überkritischen Bedingungen sind diese Kapillarkräfte sehr gering. Bei der Entfernung der fluiden Phase aus dem Gel bei unterkritischen Bedingungen bewirken die Kapillarkräfte in Abhängigkeit von der Stabilität und Art des Gels und der Polarität des zu entfernenden Lösungsmittels eine Schrumpfung des Gels unter Veränderung der Porenstruktur.

In einer bevorzugten Ausführungsform enthält das erfindungsgemäße poröse Gel von 30 bis 90 Gew.-% der Komponente (a1) aus mindestens einem mehrfunktionellen Isocyanat und von 9,99 bis 66 Gew.-% der Komponente (a2) aus mindestens einem mehrfunktionellen aromatischen Amin sowie (a3) von 0,01 bis 4 Gew.-% mindestens eines Polyalkylenpolyamins, wobei die Summe der Gew.-% der Komponenten (a1) bis (a3) bezogen auf das Gesamtgewicht der Komponenten (a1), (a2) und (a3) 100 Gew.-% ergibt.

Die Komponenten (a1), (a2) und (a3) liegen im porösen Gel in umgesetzter Form vor. Unter umgesetzter Form wird eine polymere und/oder polymergebundene Form verstanden.

Bevorzugt enthält das poröse Gel von 38 bis 80 Gew.-% der Komponente (a1) und von 19 bis 58 Gew.-% der Komponente (a2) sowie von 1 bis 4 Gew.-% der Komponente (a3), bezogen auf das Gesamtgewicht der Komponenten (a1), (a2) und (a3). Die Gew.-% reflektieren stets die eingesetzte Menge der Komponenten, die im porösen Gel in umgesetzter Form vorliegen.

Unter Funktionalität einer Verbindung soll im Rahmen der vorliegenden Erfindung die Zahl der reaktiven Gruppen pro Molekül verstanden werden. Im Fall der Komponente (a1) ist die Funktionalität die Anzahl der Isocyanatgruppen pro Molekül. Im Falle der Aminogruppen der Komponente (a2) bezeichnet die Funktionalität die Zahl der reaktiven Aminogruppen pro Molekül. Eine mehrfunktionelle Verbindung weist dabei eine Funktionalität von mindestens 2 auf.

Falls als Komponente (a1) oder (a2) Mischungen aus Verbindungen mit unterschiedlicher Funktionalität zum Einsatz kommen, ergibt sich die Funktionalität der Komponenten aus dem zahlengewichteten Mittel der Funktionalität der einzelnen Verbindungen. Eine mehrfunktionelle Verbindung enthält mindestens zwei der oben genannten funktionellen Gruppen pro Molekül.

Der mittlere Porendurchmesser wird mittels Quecksilber-Intrusionsmessung nach DIN 66133 bestimmt und ist im Rahmen der vorliegenden Erfindung grundsätzlich ein volumengewichteter Mittelwert. Die Quecksilber-Intrusionsmessung nach DIN 66133 ist eine porosimetrische Methode und wird in einem Porosimeter durchgeführt. Dabei wird Quecksilber in eine Probe des porösen Materials gepresst. Kleine Poren erfordern einen höheren Druck, um mit dem Quecksilber gefüllt zu werden als große Poren, und aus dem entsprechenden Druck/Volumen-Diagramm kann man eine Porengrößenverteilung und den volumengewichteten mittleren Porendurchmesser bestimmen.

Vorzugsweise beträgt der volumengewichtete mittlere Porendurchmesser des porösen Gels höchstens 5 Mikrometer. Besonders bevorzugt beträgt der volumengewichtete mittlere Porendurchmesser des porösen Gels höchstens 3,5 Mikrometer, ganz besonderes bevorzugt höchstens 3 Mikrometer und insbesondere höchstens 2,5 Mikrometer.

Zwar ist eine möglichst geringe Porengröße bei hoher Porosität aus Sicht einer geringen thermischen Leitfähigkeit wünschenswert. Herstellungsbedingt und um ein mechanisch ausreichend stabiles poröses Gel zu erhalten, ergibt sich jedoch eine praktische untere Grenze des volumengewichteten mittleren Porendurchmessers. Im Allgemeinen beträgt der volumengewichtete mittlere Porendurchmesser mindestens 10 nm, vorzugsweise mindestens 50 nm. In vielen Fällen beträgt der volumengewichtete mittlere Porendurchmesser mindestens 100 nm, insbesondere mindestens 200 nm.

Bevorzugt weist das erfindungsgemäße poröse Gel eine Porosität von mindestens 70 Vol.-%, insbesondere von 70 bis 99 Vol.-%, besonders bevorzugt mindestens 80 Vol.-% auf, ganz besonders bevorzugt mindestens 85 Vol.-%, insbesondere von 85 bis 95 Vol.-%. Die Porosität in Vol.-% bedeutet, dass der genannte Anteil des Gesamtvolumens des porösen Gels aus Poren besteht. Zwar ist aus Sicht einer minimalen Wärmeleitfähigkeit meist eine möglichst hohe Porosität erwünscht, doch ist die Porosität durch die mechanischen Eigenschaften und die Verarbeitbarkeit des porösen Gels nach oben begrenzt.

Erfindungsgemäß liegen die Komponenten (a1) bis (a3) im porösen Gel in polymerer Form vor. Aufgrund der erfindungsgemäßen Zusammensetzung liegen die Komponenten (a1) und (a2) im porösen Gel überwiegend über Harnstoffverknüpfungen gebunden vor. Eine weitere mögliche Verknüpfung im porösen Gel sind Isocyanurat-Verknüpfungen, die durch Trimerisation von Isocyanatgruppen der Komponente (a1) entstehen. Sofern das poröse Gel weitere Komponenten enthält, sind weitere mögliche Verknüpfungen beispielsweise Urethangruppen, welche durch Reaktion von Isocyanatgruppen mit Alkoholen oder Phenolen entstehen.

Bevorzugt liegen die Komponenten (a1) und (a2) im porösen Gel zu mindestens 50 mol-% durch Harnstoffgruppen -NH-CO-NH- verknüpft vor. Vorzugsweise liegen die Komponenten (a1) und (a2) im porösen Gel von 50 bis 100 mol-% durch Harnstoffgruppen verknüpft vor, insbesondere von 60 bis 100 mol-%, ganz besonders bevorzugt von 70 bis 100 mol-%, insbesondere 80 bis 100 mol-%, beispielsweise von 90 bis 100 mol-%.

Die zu 100 mol-% fehlenden mol-% liegen als weitere Verknüpfungen vor, insbesondere als Isocyanurat-Verknüpfungen. Die weiteren Verknüpfungen können jedoch auch in Form anderer, dem Fachmann bekannter Verknüpfungen von Isocyanat-Polymeren vorliegen. Beispielhaft genannt seien Ester-, Harnstoff-, Biuret-, Allophanat-, Carbodiimid-, Isocyanurat-, Uretdion- und/oder Urethangruppen.

Die Bestimmung der mol-% der Verknüpfungen der Monomerkomponenten im porösen Gel erfolgt mittels NMR-Spektroskopie (Kernspinresonanz) im Festkörper oder in gequollenem Zustand. Geeignete Bestimmungsmethoden sind dem Fachmann bekannt.

Das Einsatz-Verhältnis (Äquivalenzverhältnis) von NCO-Gruppen der Komponenten (a1) zu Aminogruppen der Komponente (a2) beträgt bevorzugt von 1,01 zu 1 bis 1,5 zu 1. Besonders bevorzugt beträgt das Äquivalenzverhältnis von NCO-Gruppen der Komponente (a1) zu Aminogruppen der Komponente (a2) von 1,1 zu 1 bis 1,4 zu 1, insbesondere von 1,1 zu 1 bis 1,3 zu 1. Ein Überschuss an NCO-Gruppen führt zu einer geringeren Schrumpfung des porösen Gels bei der Entfernung des Lösungsmittels.

### Komponente (a1)

Erfindungsgemäß enthält das poröse Gel mindestens ein mehrfunktionelles Isocyanat in umgesetzter Form. Vorzugsweise enthält das poröse Gel von 30 bis 90 Gew.-%, besonders bevorzugt von 38 bis 80 Gew.-%, insbesondere von 40 bis 70 Gew.-% mindestens eines mehrfunktionellen Isocyanates in umgesetzter Form, bezogen auf das Gesamtgewicht der Komponenten (a1), (a2) und (a3). Als mehrfunktionelle Isocyanate kommen aromatische, aliphatische, cycloaliphatische und/oder araliphatische Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente (a1) in diesem Fall verschiedene mehrfunktionelle Isocyanate enthält. Als Bestandteil der Komponente (a1) in Betracht kommende mehrfunktionelle Isocyanate weisen zwei (im folgenden Diisocyanate genannt) oder mehr als zwei Isocyanatgruppen pro Molekül der Komponente auf.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder p-Phenylendiisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat und/oder 4,4'-, 2,4'- und 2,2'-Dicyclohexylmethandiisocyanat.

Als mehrfunktionelle Isocyanate der Komponente (a1) sind aromatische Isocyanate bevorzugt. Besonders bevorzugt sind als mehrfunktionelle Isocyanate der Komponente (a1) folgende Ausführungsformen:
i) Mehrfunktionelle Isocyanate auf Basis von Toluylendiisocyanat (TDI), insbesondere 2,4-TDI oder 2,6-TDI oder Mischungen aus 2,4- und 2,6-TDI;
ii) Mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;
iii) Gemische aus mindestens einem aromatischen Isocyanat gemäß Ausführungsform i) und mindestens einem aromatischen Isocyanat gemäß Ausführungsform ii).

Als mehrfunktionelles Isocyanat besonders bevorzugt ist oligomeres Diphenylmethandiisocyanat. Bei oligomerem Diphenylmethandiisocyanat (im folgenden oligomeres MDI genannt) handelt es sich um ein oder ein Gemisch aus mehreren oligomeren Kondensationsprodukten und somit Derivaten von Diphenylmethandiisocyanat (MDI). Die mehrfunktionellen Isocyanate können bevorzugt auch aus Mischungen von monomeren aromatischen Diisocyanaten und oligomerem MDI aufgebaut sein.

Oligomeres MDI enthält ein oder mehrere mehrkernige Kondensationsprodukte des MDI mit einer Funktionalität von mehr als 2, insbesondere 3 oder 4 oder 5. Oligomeres MDI ist bekannt und wird häufig als Polyphenylpolymethylenlsocyanat bezeichnet. Oligomeres MDI ist üblicherweise aus einer Mischung aus MDI-basierten Isocyanaten mit unterschiedlicher Funktionalität aufgebaut. Üblicherweise wird oligomeres MDI im Gemisch mit monomerem MDI eingesetzt.

Die (mittlere) Funktionalität eines Isocyanates, welches oligomeres MDI enthält, kann im Bereich von ungefähr 2,3 bis ungefähr 5 variieren, insbesondere von 2,5 bis 3,5, insbesondere von 2,5 bis 3. Eine solche Mischung von MDI-basierten mehrfunktionellen Isocyanaten mit unterschiedlichen Funktionalitäten ist insbesondere das Roh-MDI, das bei der Herstellung von MDI anfällt.

Mehrfunktionelle Isocyanate oder Mischungen mehrerer mehrfunktioneller Isocyanate auf Basis von MDI sind bekannt und werden beispielsweise von Elastogran GmbH unter dem Namen Lupranat® vertrieben.

Vorzugsweise beträgt die Funktionalität der Komponente (a1) mindestens zwei, insbesondere mindestens 2,2 und besonders bevorzugt mindestens 2,5. Die Funktionalität der Komponente (a1) beträgt bevorzugt von 2,5 bis 4 und besonders bevorzugt von 2,5 bis 3.

Vorzugsweise beträgt der Gehalt an Isocyanatgruppen der Komponente (a1) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

In einer bevorzugten Ausführungsform besteht die Komponente (a1) aus mindestens einem mehrfunktionellen Isocyanat ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat.

Im Rahmen dieser bevorzugten Ausführungsform enthält die Komponente (a1) besonders bevorzugt oligomeres Diphenylmethandiisocyanat und weist eine Funktionalität von mindestens 2,5 auf.

### Komponente (a2)

Erfindungsgemäß enthält das poröse Gel mindestens ein mehrfunktionelles aromatisches Amin in umgesetzter Form. Vorzugsweise enthält das poröse Gel von 9,99 bis 65 Gew.-%, besonders bevorzugt von 19 bis 58 Gew.-%, insbesondere von 29 bis 57 Gew.-%, mindestens eines mehrfunktionellen aromatischen Amins in umgesetzter Form, bezogen auf das Gesamtgewicht der Komponenten (a1), (a2) und (a3).

Geeignete aromatische Amine (a2) sind insbesondere Isomere und Derivate von Diaminodiphenylmethan. Im Rahmen von Komponente (a2) bevorzugte Isomere und Derivate von Diaminodiphenylmethan sind insbesondere 4,4'-Diaminodiphenylmethan, 2,4'-Diaminodiphenylmethan, 2,2'-Diaminodiphenylmethan und oligomeres Diaminodiphenylmethan.

Geeignete aromatische Amine (a2) sind außerdem insbesondere Isomere und Derivate von Toluolamin. Im Rahmen von Komponente (a2) bevorzugte Isomere und Derivate von Toluolamin sind insbesondere Toluoldiamin, insbesondere Toluol-2,4-diamin und/oder Toluol-2,6-diamin und Diethyltoluoldiamin, insbesondere 3,5-Diethyltoluol-2,4-diamin und/oder 3,5-Diethyltoluol-2,6-diamin.

Vorzugsweise enthält die Komponente (a2) mindestens ein mehrfunktionelles aromatisches Amin, wovon mindestens eines ausgewählt ist aus Isomeren und Derivaten von Diaminodiphenylmethan, insbesondere den vorgenannten.

Besonders bevorzugt enthält die Komponente (a2) mindestens ein mehrfunktionelles aromatisches Amin, wovon mindestens eines ausgewählt ist aus 4,4'-Diaminodiphenylmethan, 2,4'-Diaminodiphenylmethan, 2,2'-Diaminodiphenylmethan und oligomerem Diaminodiphenylmethan.

Oligomeres Diaminodiphenylmethan enthält ein oder mehrere mehrkernige Methylenverbrückte Kondensationsprodukte von Anilin und Formaldehyd. Oligomeres MDA enthält mindestens ein, im Allgemeinen jedoch mehrere Oligomere des MDA mit einer Funktionalität von mehr als 2, insbesondere 3 oder 4 oder 5. Oligomeres MDA ist bekannt oder kann nach an sich bekannten Methoden hergestellt werden. Üblicherweise wird oligomeres MDA in Form von Mischungen mit monomerem MDA eingesetzt.

Die (mittlere) Funktionalität eines mehrfunktionellen Amins, welches oligomeres MDA enthält, kann im Bereich von ungefähr 2,3 bis ungefähr 5 variieren, insbesondere von 2,3 bis 3,5 und insbesondere von 2,3 bis 3. Eine solche Mischung von MDA-basierten mehrfunktionellen Aminen mit unterschiedlichen Funktionalitäten ist insbesondere das Roh-MDA, das insbesondere bei der Kondensation von Anilin mit Formaldehyd, üblicherweise katalysiert durch Salzsäure, als Zwischenprodukt der Herstellung von Roh-MDI entsteht. Bevorzugt enthält die Komponente (a2) oligomeres Diaminodiphenylmethan und weist eine Funktionalität von mindestens 2,3 auf.

### Komponente (a3)

Erfindungsgemäß enthält das poröse Gel mindestens einem Polyalkylenpolyamin in umgesetzter Form als Komponente (a3).

Vorzugsweise enthalten die erfindungsgemäßen poröse Gele von 0,1 bis 5 Gew.-% der Komponente (a3) bezogen auf das Gesamtgewicht der Komponenten (a1), (a2) und (a3), besonders bevorzugt von 1 bis 4 Gew.-%, insbesondere von 1 bis 3 Gew.-%.

Ein höherer Anteil der Komponente (a3) wirkt sich hinsichtlich der Porenstruktur und insbesondere hinsichtlich der mechanischen Eigenschaften und des Wärmeisolationsvermögens vorteilhaft aus.

Allerdings führt eine Erhöhung des Anteils der Komponente (a3) aufgrund ihrer hohen Reaktivität zu einer potentiellen Verschlechterung der Homogenität der Materialstruktur und -eigenschaften. Bevor eine homogene Vermischung möglich ist, können sich im Material ausgehärtete Bereiche bilden, was zu einer Verschlechterung der Eigenschaften führt.

Vor diesem Hintergrund hat es sich als vorteilhaft herausgestellt, Komponente (a3) in einer Menge von mindestens 0,1 Gew.-%, bevorzugt mindestens 1 Gew.-%, insbesondere mindestens 2 Gew.-% zu verwenden, jeweils bezogen auf das Gesamtgewicht der Komponenten (a1) bis (a3). Es hat sich außerdem als vorteilhaft herausgestellt, Komponente (a3) in einer Menge von höchstens 5 Gew.-%, insbesondere höchstens 4 Gew.-%, besonders bevorzugt höchstens 3 Gew.-% zu verwenden, jeweils bezogen auf das Gesamtgewicht der Komponenten (a1) bis (a3).

Unter dem Begriff Polyalkylenpolyamin sollen im Rahmen der vorliegenden Erfindung aliphatische Amine verstanden werden, die mindestens 3 reaktive Aminogruppen, d. h. primäre oder sekundäre Aminogruppen, enthalten und die ein gewichtsmittleres Molekulargewicht (Mw) von mindestens 500 g/mol aufweisen.

Das Molekulargewicht der in Betracht kommenden Polyalkylenpolyamine kann in einem weiten Bereich variieren, insbesondere von 500 g/mol bis 3.000.000 g/mol. Vorzugsweise weisen die als Komponente (a3) bevorzugten Polyalkylenpolyamine ein gewichtsmittleres Molekulargewicht (Mw) von 500 g/mol bis 750.000 g/mol, vorzugsweise von 800 g/mol bis 500.000 g/mol, besonders bevorzugt von 1000 g/mol bis 400.000 g/mol, auf.

Als Polyalkylenpolyamine sind insbesondere Polyethylenimine besonders bevorzugt. Unter Polyethyleniminen werden im Rahmen der vorliegenden Erfindung sowohl Oligomere als auch Homo- und Copolymere verstanden, welche die Gruppierung -CH2-CH2-NH- aufweisen sowie mindestens 3 Aminogruppen enthalten und ein gewichtsmittleres Molekulargewicht (Mw) von mindestens 500 g/mol aufweisen.

Vorzugsweise sind die als Komponente (a3) besonders bevorzugten Polyethylenimine aus Einheiten aufgebaut, die ausgewählt sind aus terminalen Ethylenimin-einheiten der Struktur -(CH₂-CH₂-NH₂), linearen Ethylenimineinheiten der Struktur -(CH₂-CH₂-NH)-und verzweigten Ethylenimineinheiten der Struktur N-(CH₂CH₂-)₃.

Ganz besonders bevorzugt besteht die Komponente (a3) aus mindestens einem Polyethylenimin. Das Molekulargewicht der in Betracht kommenden Polyethylenimine kann in einem weiten Bereich variieren, insbesondere von 500 g/mol bis 3.000.000 g/mol. Vorzugsweise weisen die als Komponente (a3) besonders bevorzugten Polyethylenimine ein gewichtsmittleres Molekulargewicht (Mw) von 500 g/mol bis 750.000 g/mol, vorzugsweise von 800 g/mol bis 500.000 g/mol, besonders bevorzugt von 800 g/mol bis 50.000 g/mol, insbesondere von 1000 g/mol bis 25.000 g/mol, auf.

Das gewichtsmittlere Molekulargewicht von Polyalkylenpolyaminen wird im Rahmen der vorliegenden Erfindung mittels statischer Lichtstreuung bestimmt, worauf sich alle im Rahmen dieser Erfindung genannten Molekulargewichte der Polyalkylenpolyamine und Polyethylenimine beziehen. Hierbei wird zunächst das Brechungsindexinkrement dn/dc durch Differential-Refraktometrie bestimmt. Die Messung durch statische Lichtstreuung erfolgt in einem thermodynamisch guten Lösungsmittel. Der Fachmann wählt die Konzentration des Polyalkylenpolyamins im Lösungsmittel zudem so, dass eine verdünnte Lösung vorliegt. Die Auswertung des Molekulargewichts erfolgt gemäß Auftragung nach Zimm.

Der Einsatz von Polyethyleniminen mit einem hohen Molekulargewicht beziehungsweise einer hohen Viskosität führt im Allgemeinen zu porösen Gelen mit besonders guten Eigenschaften, insbesondere hinsichtlich Porosität, Wärmeleitfähigkeit und Festigkeit. Der Einsatz von Polyethyleniminen mit einem niedrigen Molekulargewicht beziehungsweise mit einer niedrigen Viskosität führt im Allgemeinen zu einer besonders einfachen Durchführung des Herstellungsverfahrens bei ausreichend guten Eigenschaften, insbesondere hinsichtlich Porosität, Wärmeleitfähigkeit und Festigkeit.

Die Viskosität der Polyethylenimine liegt im allgemeinen im Bereich von 100 bis 300.000 mPa.s, vorzugsweise im Bereich von 500 bis 250.000 mPa.s, insbesondere von 1000 bis 200.000 mPa.s, ermittelt gemäß DIN EN ISO 2555 (Viskosimeter des Typs RVT der Firma Brookfield, 20°C, 20 Upm).

Polyethylenimine sind beispielsweise nach den Verfahren in Ullmann Electronic Release unter dem Stichwort "Aziridine" oder gemäß WO-A 94/12560 erhältlich.

Die Ethylenimin-Homopolymerisate und Oligomere auf Basis von Ethylenimin sind im Allgemeinen durch Polymerisation von Ethylenimin (Aziridin) in wässriger oder organischer Lösung in Gegenwart von säureabspaltenden Verbindungen, Säuren oder LewisSäuren erhältlich. Derartige Homopolymerisate sind lineare oder vorzugsweise verzweigte Polymere. Letztere weisen in der Regel primäre, sekundäre und tertiäre Aminogruppen im Verhältnis von beispielsweise ungefähr 1 : 1 : 0,7 auf. Die Verteilung der Aminogruppen wird mittels ¹³C-NMR Spektroskopie bestimmt.

Sofern als Polyethylenimin Copolymere eingesetzt werden, sind Comonomere bevorzugt, welche mindestens zwei Aminofunktionen aufweisen. Als geeignete Comonomere seien beispielsweise Alkylendiamine mit 2 bis 10 C-Atomen im Alkyenrest genannt, wobei Ethylendiamin und Propylendiamin bevorzugt sind. Weiterhin geeignete Comonomere sind Diethylentriamin, Triethylentetramin, Tetraethylenpentamin, Dipropylentriamin, Tripropylentetramin, Dihexamethylentriamin, Aminopropylethylendiamin und Bisaminopropylethylendiamin.

Vorzugsweise werden als Polyethylenimine jedoch solche eingesetzt, die im Wesentlichen aus Ethylenimin aufgebaut sind, insbesondere Homopolymerisate von Ethylenimin.

Die Polyalkylenpolyamine werden vorzugsweise in wasserfreier Form eingesetzt, wobei wasserfrei bedeutet, dass der Wassergehalt von 0 bis 1,5 Gew.-% gemäß DIN 53715 nach Karl Fischer, vorzugsweise von 0 bis 1 Gew.-%, besonders bevorzugt von 0 bis 0,5 Gew.-% beträgt. Wasser führt in größeren Mengen oft zu einer Aufschäumung und zu einer Verschlechterung der Porenstruktur.

Es ist jedoch grundsätzlich möglich, konzentrierte wässrige Lösungen der Polyalkylenpolyamine zu verwenden, was insbesondere dann einen verfahrenstechnischen Vorteil hat, wenn solche mit sehr hohem Molekulargewicht verwendet werden.

In einer besonders bevorzugten Ausführungsform sind die Polyethylenimine hochverzweigt. Unter hochverzweigten Polyethyleniminen werden im Rahmen dieser Erfindung unvernetzte Makromoleküle mit -NH-Gruppen verstanden, die bezüglich ihres strukturellen Aufbaus, insbesondere bezüglich der Länge und Abfolge der Abschnitte zwischen Verzweigungspunkten, uneinheitlich sind. Sie können entweder ausgehend von einem Zentralmolekül analog zu Dendrimeren, jedoch mit uneinheitlicher Kettenlänge der Äste aufgebaut sein. Sie können aber auch linear, mit funktionellen Seitengruppen, aufgebaut sein oder aber, als Kombination der beiden Extreme, lineare und verzweigte Molekülteile aufweisen.

Der Verzweigungsgrad (degree of branching, DB) ist definiert als DB = (T + Z) / (T + Z + L), wobei T die Anzahl der terminalen Monomereinheiten, Z die Anzahl der verzweigten Monomereinheiten, und L die Anzahl der linearen Monomereinheiten, bedeutet und wird üblicherweise in % angegeben. Diese Anzahlen werden mittels ¹³C-Kemresonanzspektren als primäre (ergibt T), tertiäre (ergibt Z) sowie sekundäre (ergibt L) Aminogruppen bestimmt. Zur Definition des degree of branching siehe auch H. Frey et al., Acta Polym. 1997, 48, 30.

Der Verzweigungsgrad DB der besonders bevorzugten hochverzweigten Polyethylenimine beträgt von 40 bis 100 %, bevorzugt von 50 bis 80 % und insbesondere von 55 bis 70 %.

Geeignete Polyethylenimine sind kommerziell erhältlich, etwa als Lupasol® von BASF.

### Verfahren zur Herstellung von porösen Gelen

Das erfindungsgemäße Verfahren umfasst folgende Schritte:
(a) Bereitstellen der Komponente (a1) und getrennt davon der Komponenten (a2) und (a3) jeweils in einem Lösungsmittel (C);
(b) Umsetzung der Komponenten (a1) bis (a3) in Gegenwart des Lösungsmittels (C) zu einem Gel;
(c) Trocknen des im vorigen Schritt erhaltenen Gels, vorzugsweise durch Überführung der im Gel enthaltenen Flüssigkeit in den gasförmigen Zustand bei einer Temperatur und einem Druck unterhalb der kritischen Temperatur und des kritischen Drucks der im Gel enthaltenen Flüssigkeit.

Gemäß einer bevorzugten Ausführungsform werden die Komponente (a1) in einem ersten Gefäß und die Komponenten (a2) und (a3) in einem zweiten Gefäß jeweils in einem Lösungsmittel (C) bereitgestellt und schließlich zu Beginn von Schritt (b) vereinigt. Das erfindungsgemäße Verfahren umfasst demzufolge vorzugsweise folgende Schritte:
(a-1) Bereitstellen der Komponente (a1) und getrennt davon der Komponenten (a2) und (a3) jeweils in einem Lösungsmittel (C), wobei die Komponenten (a2) und (a3) vorzugweise vorab gemischt werden;
(a-2) Bereitstellen einer Gelvorstufe (A) enthaltend die Komponenten (a1) bis (a3) in einem Lösungsmittel (C) durch Vereinigung der in Schritt (a-1) bereitgestellten Komponenten;
(b) Umsetzung der Gelvorstufe (A) in Gegenwart des Lösungsmittels (C) zu einem Gel;
(c) Trocknen des im vorigen Schritt erhaltenen Gels, vorzugsweise durch Überführung der im Gel enthaltenen Flüssigkeit in den gasförmigen Zustand bei einer Temperatur und einem Druck unterhalb der kritischen Temperatur und des kritischen Drucks der im Gel enthaltenen Flüssigkeit.

### Schritt (a)

Erfindungsgemäß erfolgt in Schritt (a) das Bereitstellen der Komponenten (a1) getrennt von den Komponenten (a2) und (a3) jeweils in einem Lösungsmittel (C). Die Gelvorstufe (A) wird durch das Mischen der Komponenten (a1) bis (a3) erhalten. Die Gelvorstufe (A) enthält somit die weiter oben unter "poröses Gel beschriebenen Komponenten (a1) bis (a3) in den ebenfalls weiter oben beschriebenen Mengenanteilen.

Die Komponenten (a1) und (a2) liegen in der Gelvorstufe (A) in monomerer Form vor oder wurden vorab durch teilweise oder nicht-äquimolare Umsetzung von Isocyanat- und Aminogruppen in ein Präpolymer umgewandelt, das gegebenenfalls mit weiteren Komponenten (a1) bis (a3) die Gelvorstufe (A) bildet. Die Gelvorstufe (A) ist somit gelierbar, das heißt sie kann durch Vernetzung in ein Gel umgesetzt werden. Die Mengenanteile der Komponenten (a1) bis (a3) im porösen Gel, worin sie in polymerer Form vorliegen, entsprechen den Mengenanteilen der Komponenten (a1) bis (a3) in der Gelvorstufe (A), worin sie in noch nicht umgesetzter Form vorliegen.

Die Viskosität der eingesetzten Komponente (a1) kann in einem weiten Bereich variieren. Vorzugsweise weist die in Schritt (a) des erfindungsgemäßen Verfahrens eingesetzte Komponente (a1) eine Viskosität von 100 bis 3000 mPa.s, besonders bevorzugt von 200 bis 2500 mPa.s, auf.

Der Begriff Gelvorstufe (A) kennzeichnet die gelierbare Mischung aus den Komponenten (a1) bis (a3). Die Gelvorstufe (A) wird anschließend in Schritt (b) in Gegenwart des Lösungsmittels (C) zu einem Gel, ein vernetztes Polymer, umgesetzt.

In Schritt (a) des erfindungsgemäßen Verfahrens stellt man somit eine Mischung enthaltend die Gelvorstufe (A) in einem flüssigen Verdünnungsmittel bereit. Der Begriff Lösungsmittel (C) umfasst im Rahmen der vorliegenden Erfindung flüssige Verdünnungsmittel, das heißt sowohl Lösungsmittel im engeren Sinne als auch Dispersionsmittel. Die Mischung kann insbesondere eine echte Lösung, eine kolloidale Lösung oder eine Dispersion, z.B. eine Emulsion oder Suspension, sein. Bevorzugt ist die Mischung eine echte Lösung. Das Lösungsmittel (C) ist eine unter den Bedingungen des Schrittes (a) flüssige Verbindung, vorzugsweise ein organisches Lösungsmittel.

Es ist dem Fachmann bekannt, dass aromatische Amine, insbesondere Diamine, entstehen, wenn man aromatische Isocyanate, insbesondere Diisocyanate, mit Wasser umsetzt. Demzufolge ist es möglich, an Stelle von mehrfunktionellen aromatischen Aminen entsprechende aromatische mehrfunktionelle Isocyanate und eine äquivalente Menge an Wasser als Komponente (a2) einzusetzen, so dass die gewünschte Menge an mehrfunktionellem aromatischem Amin in situ oder in einer Vorabumsetzung entsteht. Bei einem Überschuss der Komponente (a1) und gleichzeitiger Zugabe von Wasser kann die Komponente (a1) in situ anteilmäßig zur Komponente (a2) umgesetzt werden, welche dann unmittelbar mit der verbleibenden Komponente (a1) unter Bildung von Harnstoff-Verknüpfungen reagiert.

Bevorzugt wird das mehrfunktionelle Amin jedoch nicht im Lösungsmittel (C) in Gegenwart der Komponente (a1) aus der Komponente (a2) erzeugt, sondern wird separat als Komponente (a2) zugegeben. Demzufolge enthält die in Schritt (a) bereitgestellte Mischung bevorzugt kein Wasser.

Als Lösungsmittel (C) kommen prinzipiell eine oder ein Gemisch aus mehreren Verbindungen in Betracht, wobei das Lösungsmittel (C) bei den Temperatur- und Druckbedingungen, unter denen die Mischung in Schritt (a) bereitgestellt wird (kurz: Lösungsbedingungen), flüssig ist. Die Zusammensetzung des Lösungsmittels (C) wird so gewählt, dass es in der Lage ist, die organische Gelvorstufe zu lösen oder zu dispergieren, bevorzugt zu lösen. Bevorzugte Lösungsmittel (C) sind solche, die ein Lösungsmittel für die organische Gelvorstufe (A) sind, d. h. solche, die die organische Gelvorstufe (A) unter Reaktionsbedingungen vollständig lösen.

Das Reaktionsprodukt aus Schritt (b) ist ein Gel, d. h. ein viskoelastisches chemisches Netzwerk, das durch das Lösungsmittel (C) gequollen ist. Ein Lösungsmittel (C), welches ein gutes Quellmittel für das in Schritt (b) gebildete Netzwerk darstellt, führt in der Regel zu einem Netzwerk mit feinen Poren und kleinem mittleren Porendurchmesser, wohingegen ein Lösungsmittel (C), welches ein schlechtes Quellmittel für das aus Schritt (b) resultierende Gel darstellt, in der Regel zu einem grobporigen Netzwerk mit großem mittleren Porendurchmesser führt.

Die Wahl des Lösungsmittels (C) beeinflusst somit die angestrebte Porengrößenverteilung und die angestrebte Porosität. Die Wahl des Lösungsmittels (C) erfolgt im Allgemeinen zudem so, dass ein Ausfällen oder Ausflocken durch Bildung eines präzipitierten Reaktionsproduktes während oder nach Schritt (b) des erfindungsgemäßen Verfahrens weitestgehend nicht auftritt.

Bei Wahl eines geeigneten Lösungsmittels (C) ist der Anteil an präzipitiertem Reaktionsprodukt üblicherweise kleiner als 1 Gew.-%, bezogen auf das Gesamtgewicht der Mischung. Die Menge an gebildetem präzipitiertem Produkt in einem bestimmten Lösungsmittel (C) kann gravimetrisch bestimmt werden, indem die Reaktionsmischung vor dem Gelpunkt über ein geeignetes Filter filtriert wird.

Als Lösungsmittel (C) kommen die aus dem Stand der Technik bekannten Lösungsmittel für Isocyanat-basierte Polymere in Frage. Bevorzugte Lösungsmittel sind dabei solche, die ein Lösungsmittel für sämtliche Komponenten (a1) bis (a3) sind, d. h. solche, die die Komponenten (a1) bis (a3) unter Reaktionsbedingungen weitgehend vollständig lösen, so dass der Gehalt der organischen Gelvorstufe (A) in der gesamten in Schritt (a) bereitgestellten Mischung einschließlich des Lösungsmittels (C) bevorzugt mindestens 5 Gew.-% beträgt. Bevorzugt ist das Lösungsmittel (C) gegenüber Komponente (a1) inert, d. h. nicht reaktiv.

Als Lösungsmittel (C) kommen beispielsweise Ketone, Aldehyde, Alkylalkanoate, Amide wie Formamid und N-Methylpyrollidon, Sulfoxide wie Dimethylsulfoxid, aliphatische und cycloaliphatische halogenierte Kohlenwasserstoffe, halogenierte aromatische Verbindungen und fluorhaltige Ether in Betracht. Ebenso in Betracht kommen Mischungen aus zwei oder mehreren der vorgenannten Verbindungen.

Weiterhin kommen Acetale, insbesondere Diethoxymethan, Dimethoxymethan und 1,3-Dioxolan, als Lösungsmittel (C) in Betracht.

Dialkylether und zyklische Ether sind als Lösungsmittel (C) ebenfalls geeignet. Bevorzugte Dialkylether sind insbesondere solche mit 2 bis 6 Kohlenstoffatomen, insbesondere Methyl-Ethylether, Diethylether, Methyl-Propylether, Methyl- Isopropylether, Propyl-Ethylether, Ethyl-Isopropylether, Dipropylether, Propyl-Isopropylether, Diisopropylether, Methyl-Butylether, Methyl-Isobutylether, Methyl-t-Butylether, Ethyl-n-Butylether, Ethyl-Isobutylether und Ethyl-t-Butylether. Bevorzugte zyklische Ether sind insbesondere Tetrahydrofuran, Dioxan und Tetrahydropyran.

Ketone und Aldehyde mit Alkylgruppen mit bis zu 3 Kohlenstoffatomen pro Substituent sind als Lösungsmittel (C) bevorzugt.

In vielen Fällen ergeben sich besonders geeignete Lösungsmittel (C), indem man zwei oder mehrere miteinander vollständig mischbare Verbindungen, ausgewählt aus den vorgenannten Lösungsmitteln, in Form eines Gemisches einsetzt.

Erfindungsgemäß erfolgt in Schritt (a) das Bereitstellen der Komponenten (a1) einerseits sowie (a2) und (a3) andererseits in getrennter Form.

Vorzugsweise liegen die primären Aminogruppen der Komponente (a3) zu Beginn von Schritt (b) geschützt vor. Besonders bevorzugt liegen die primären Aminogruppen der Komponente (a3) vor Durchführung von Schritt (b) geschützt vor. Ganz besonders bevorzugt wird in Schritt (a) die Komponente (a3) bereitgestellt, wobei die primären Aminogruppen in geschützter Form vorliegen, insbesondere durch Lösen in einem Mittel zum Schutz primärer Aminogruppen, welches gleichzeitig das Lösungsmittel (C) ist.

Unter geschützt vorliegenden primären Aminogruppen ist zu verstehen, dass die primären Aminogruppen im Wesentlichen nicht in freier Form als -NH₂ vorliegen. Die geschützt vorliegenden primären Aminogruppen der Komponente (a3) weisen eine verringerte Reaktivität gegenüber Isocyanaten auf. Vorzugsweise liegen die primären Aminogruppen durch reversible Anbindung an mindestens eine weitere funktionelle Gruppe beziehungsweise an mindestens ein weiteres Molekül (sogenannte Schutzgruppen) geschützt vor.

Unter reversibler Anbindung ist dabei zu verstehen, dass die entsprechenden funktionellen Gruppen beziehungsweise Moleküle (Schutzgruppen) zwar die Reaktivität der primären Aminogruppen gegenüber Isocyanaten vermindern, die Reaktion aber nicht vollständig unterdrücken, indem sie entweder vor der Reaktion von primären Aminogruppen mit Isocyanatgruppen gezielt abgespalten werden oder-dies ist bevorzugt - im Fortgang des Schrittes (b) des erfindungsgemäßen Verfahrens reaktive primäre Aminogruppen nachgebildet werden, was zu einer verringerten Reaktionsgeschwindigkeit zwischen primären Aminogruppen mit Isocyanatgruppen führt. Eine solche Nachbildung kann beispielsweise im Rahmen eines Gleichgewichts zwischen geschützter Form und reaktiver freier Form erfolgen.

Besonders bevorzugt liegen die primären Aminogruppen der Komponente (a3) in Schritt (b) in Form eines Ketimins und/oder eines Aldimins vor. Ganz besonders bevorzugt erfolgt das Bereitstellen der Komponente (a3) gemäß Schritt (a) des erfindungsgemäßen Verfahrens in Form eines Ketimins und/oder Aldimins.

Darunter ist zu verstehen, dass die primären Aminogruppen der Komponente (a3) zumindest teilweise, vorzugsweise vollständig, in Form einer Ketimin- und/oder Aldimingruppe vorliegen. Das Ketimin- und/oder Aldimin kann insbesondere durch Verwendung eines Ketons und/oder Aldehyds als Lösungsmittel (C) erhalten werden.

Geeignete Aldimine oder Ketimine leiten sich von Diaminen oder mehrfunktionellen Aminen mit primären Aminogruppen und Aldehyden oder Ketonen ab und können aus diesen Stoffen in an sich bekannter Weise erhalten werden, beispielsweise durch Erwärmen in einem inerten organischen Lösungsmittel, gegebenenfalls unter Entfernung des sich bildenden Wassers, gegebenenfalls katalysiert beispielsweise durch eine Säure, vorzugsweise jedoch durch Umsetzung in einem Überschuss Keton und/oder Aldehyd als Lösungsmittel. Die-Aldimine oder Ketimine können darüber hinaus auch noch weitere funktionelle Gruppen enthalten, die gegenüber Isocyanat reaktiv sind, beispielsweise Hydroxyl- oder Iminogruppen.

Des Weiteren kommen Ketimine oder Aldimine in Betracht, die außer geschützten primären Aminogruppen noch freie sekundäre Aminogruppen enthalten, wie zum Beispiel das Diketimin von Diethylentriamin mit Methylisobutylketon.

Sofern die Schutzgruppe durch Zugabe eines Abspaltungsmittels vor oder während der Durchführung des Schrittes (b) abgespalten wird, kann im Fall der Aldimine und Ketimine die Schutzgruppe insbesondere durch Zugabe von Wasser als Abspaltungsmittel abgespalten werden.

Vorzugsweise werden die Aldimine und/oder Ketimine jedoch ohne vorherige Zugabe eines Abspaltungsmittels in einer verlangsamten Reaktion mit Isocyanaten in Schritt (b) des erfindungsgemäßen Verfahrens umgesetzt. Hierbei wird vorzugsweise ein Gleichgewicht zwischen freien und geschützten primären Aminogruppen im Lösungsmittel (C) ausgenutzt.

Die Umsetzungsprodukte zwischen mehrfunktionellen Aldiminen und/oder Ketiminen und Polyisocyanaten sind an sich chemisch identisch oder weitgehend identisch zu denen einer direkten Umsetzung von Aminogruppen und Isocyanatgruppen. Allerdings wird durch die Verringerung der Reaktionsgeschwindigkeit von primären aliphatischen Aminogruppen und Isocyanatgruppen insbesondere die Porenstruktur des in Schritt (b) resultierenden Gels positiv beeinflusst.

Vorzugsweise sind die reversibel mit primären Aminen reagierenden Schutzgruppen unter den Versuchsbedingungen flüssig. Vorzugsweise werden die Schutzgruppen in Form eines gegenüber primären Aminogruppen reaktiven Lösungsmittels (C) eingesetzt.

Ganz besonders bevorzugt wird in Schritt (a) die Komponente (a3) gelöst in einem Keton und/oder Aldehyd als Lösungsmittel (C) zusammen mit der Komponente (a2) bereitgestellt und in Schritt (b) mit der Komponente (a1) vereinigt.

Aldehyde oder Ketone, die zur Herstellung der Aldimine oder Ketimine verwendet werden können sind insbesondere solche entsprechend der allgemeinen Formel R²-(CO)-R¹, wobei R¹ und R² Wasserstoff oder Alkylgruppen mit 1,2,3 oder 4 Kohlenstoffatomen sind. Geeignete Aldehyde oder Ketone sind insbesondere Acetaldehyd, Propionaldehyd, n-Butyraldehyd, Isobutyraldehyd, 2-Ethylbutyraldehyd, Valeraldehyd, Isopentaldehyd, 2-Methylpentaldehyd, 2-Ethylhexaldehyde, Acrolein, Methacrolein, Crotonaldehyd, Furfural, Acroleindimer, Methacroelindimer, 1,2,3,6-Tetrahydrobenzaldehyd, 6-Methyl-3-cyclohexenaldehyd, Cyanacetaldehyd, Glyoxynsäureethylester, Benzaldehyd, Aceton, Methylisobutylketon, Diethylketon, Methylethylketon, Methyl-n-butylketon, Ethylisopropylketon, 2-Acetylfuran, 2-Methoxy-4-methylpentan-2-on, Cyclohexanon und Acetophenon. Die vorgenannten Aldehyde und Ketone können auch in Form von Mischungen eingesetzt werden.

Grundsätzlich ist eine Herstellung eines Aldimins oder Ketimins vorab in Reinform sowie anschließendem Bereitstellen als Lösung in einem Lösungsmittel (C) möglich. Vorzugsweise werden im erfindungsgemäßen Verfahren die vorgenannten Aldehyde und/oder Ketone jedoch als Lösungsmittel (C) eingesetzt, wobei die Bildung des Aldimins oder Ketimins beim Lösen der Komponente (a2) erfolgt.

Es ist wünschenswert, dass der Aldehyd oder das Keton einen Siedpunkt unter etwa 180°C besitzt, so dass es aus dem Polymer während der Abbindungsstufe leicht entweichen kann.

Vorzugsweise werden die Komponenten (a1) einerseits und Komponenten (a2) und (a3) andererseits getrennt voneinander in einem Lösungsmittel (C), insbesondere einem Aldehyd und/oder Keton, gelöst.

Geeignete Lösungsmittel (C) sind insbesondere solche Aldehyde und/oder Ketone, in denen die Komponenten (a1) bis (a3) eine ausreichende Löslichkeit aufweisen und in denen sich durch Umsetzung mit den primären Aminogruppen der Komponente (a2) ein Aldimin und/oder Ketimin bildet, vorzugsweise bei Raumtemperatur.

Prinzipiell können die Komponenten (a1), (a2) und (a3) in unterschiedlichen Lösungsmitteln (c1) und (c2) gelöst werden, sofern die Lösungsmittel vollständig miteinander mischbar sind und die Komponenten (a1) bis (a3) im Lösungsmittelgemisch jeweils eine ausreichende Löslichkeit aufweisen.

Um in Schritt (b) ein ausreichend stabiles Gel zu erhalten, das bei der Trocknung in Schritt (c) nicht stark schrumpft, darf der Anteil der Gelvorstufe (A) an der gesamten, in Schritt (a) des erfindungsgemäßen Verfahrens bereitgestellten Mischung im Allgemeinen nicht weniger als 5 Gew.-% betragen. Bevorzugt beträgt der Anteil der Gelvorstufe (A) an der gesamten, in Schritt (a) des erfindungsgemäßen Verfahrens bereitgestellten Mischung einschließlich des Lösungsmittels (C) mindestens 8 Gew.-%, besonders bevorzugt mindestens 10 Gew.-%, insbesondere mindestens 12 Gew.-%.

Andererseits darf die Konzentration der Komponenten in der bereitgestellten Mischung nicht zu hoch gewählt werden, da ansonsten kein poröses Gel mit günstigen Eigenschaften erhalten wird. Im Allgemeinen beträgt der Anteil der Gelvorstufe (A) an der gesamten, in Schritt (a) des erfindungsgemäßen Verfahrens bereitgestellten Mischung höchstens 40 Gew.-%. Bevorzugt beträgt der Anteil der Gelvorstufe (A) an der gesamten, in Schritt (a) des erfindungsgemäßen Verfahrens bereitgestellten Mischung einschließlich des Lösungsmittels (C) höchstens 30 Gew.-%, besonders bevorzugt höchstens 20 Gew.-%, insbesondere höchstens 15 Gew.-%.

Optional enthält die in Schritt (a) bereitgestellte Mischung als weitere Komponente (B) noch mindestens einen Katalysator (b1). Vorzugsweise wird die Umsetzung der Gelvorstufe (A) jedoch ohne Anwesenheit eines Katalysators durchgeführt.

Sofern ein Katalysator (b1) eingesetzt wird, werden üblicherweise Trimerisationskatalysatoren verwendet, welche die Bildung von Isocyanuraten katalysieren. Als solche Trimerisationskatalysatoren können zum Beispiel dem Fachmann weitläufig bekannte, zum Beispiel die im folgenden ausgeführten, verwendet werden.

Sofern Trimerisationskatalysatoren als Komponente (b1) eingesetzt werden, sind bekannte Katalysatoren wie quaternäre Ammoniumhydroxide, Alkalimetall- und Erdalkalimetallhydroxide, -alkoxide und -carboxylate, z.B. Kaliumacetat und Kalium-2-ethylhexanoat, bestimmte tertiäre Amine und nicht-basische Metallcarboxylate, z.B. Bleioktoat und Triazinderivate, insbesondere symmetrische Triazinderivate, geeignet. Triazinderivate sind als Trimerisationskatalysatoren besonders geeignet.

Die Komponenten (a1) bis (a3) werden bevorzugt so eingesetzt, dass die Gelvorstufe (A) von 30 bis 90 Gew.-% der Komponente (a1), von 9,99 bis 65 Gew.-% der Komponente (a2) und von 0,01 bis 5 Gew.-% der Komponente (a3) enthält.

Bevorzugt enthält die Gelvorstufe (A) von 38 bis 80 Gew.-% der Komponente (a1), von 19 bis 58 Gew.-% der Komponente (a2) und von 1 bis 4 Gew.-% der Komponente (a3). Besonders bevorzugt enthält die Gelvorstufe (A) von 40 bis 70 Gew.-% der Komponente (a1), von 28 bis 57 Gew.-% der Komponente (a2) und von 1 bis 3 Gew.-% der Komponente (a3).

Die in Schritt (a) bereitgestellte Mischung kann außerdem übliche, dem Fachmann bekannte Hilfsmittel als weitere Bestandteile (B) enthalten. Genannt seien beispielsweise oberflächenaktive Substanzen, Flammschutzmittel, Keimbildungsmittel, Oxidationsstabilisatoren, Gleit- und Entformungshilfen, Farbstoffe und Pigmente, Stabilisatoren, z.B. gegen Hydrolyse, Licht, Hitze oder Verfärbung, anorganische und/oder organische Füllstoffe, Verstärkungsmittel und Biozide.

Nähere Angaben über die oben genannten Hilfsmittel- und Zusatzstoffe sind der Fachliteratur zu entnehmen, z.B. aus Plastics Additive Handbook, 5th edition, H. Zweifel, ed, Hanser Publishers, München, 2001.

Das Bereitstellen der Mischung gemäß Schritt (a) des erfindungsgemäßen Verfahrens kann auf übliche Weise erfolgen. Bevorzugt wird dazu ein Rührer oder eine andere Mischvorrichtung eingesetzt, um eine gute Durchmischung zu erzielen. Die sonstigen Mischbedingungen sind in der Regel nicht kritisch, beispielsweise kann man bei 0 bis 100°C und 0,1 bis 10 bar (absolut), insbesondere z.B. bei Raumtemperatur und Atmosphärendruck, mischen.

Die in Schritt (a) bereitgestellte Mischung kann auch als Sol bezeichnet werden. Es soll dabei unter einem Sol sowohl eine kolloidale Lösung verstanden werden, in der die organische Gelvorstufe (A) feinstverteilt in einem Lösungsmittel als Dispersionsmedium dispergiert ist, oder um eine echte Lösung der organischen Gelvorstufe (A) in einem Lösungsmittel.

### Schritt (b)

Erfindungsgemäß erfolgt in Schritt (b) die Umsetzung der Komponenten (a1) bis (a3) in Gegenwart des Lösungsmittels (C) zu einem Gel. In Schritt (b) des erfindungsgemäßen Verfahrens wird somit die organische Gelvorstufe (A) in einer Gelierungsreaktion zu einem Gel umgesetzt. Bei der Gelierungsreaktion handelt es sich um eine Polyadditionsreaktion, insbesondere um eine Polyaddition von Isocyanatgruppen und Aminogruppen.

Unter einem Gel soll ein vernetztes System auf Basis eines Polymers verstanden werden, das in Kontakt mit einer Flüssigkeit (sog. Solvogel oder Lyogel, bzw. mit Wasser als Flüssigkeit: Aquagel oder Hydrogel) vorliegt. Dabei bildet die Polymerphase ein kontinuierliches räumliches Netzwerk.

Im Rahmen von Schritt (b) des erfindungsgemäßen Verfahrens entsteht das Gel üblicherweise durch Ruhenlassen, z.B. durch einfaches Stehenlassen des Behälters, Reaktionsgefäßes oder Reaktors, in dem sich die Mischung befindet (im folgenden Geliervorrichtung genannt). Bevorzugt wird während des Gelierens (Gelbildung) die Mischung nicht gerührt oder durchmischt, weil dies die Ausbildung des Gels behindern könnte. Es hat sich als vorteilhaft erwiesen, die Mischung während des Gelierens abzudecken bzw. die Geliervorrichtung zu verschließen.

Die Dauer des Gelierens variiert je nach Art und Menge der eingesetzten Komponenten und der Temperatur und kann mehrere Tage betragen. Üblicherweise beträgt sie von 1 Minute bis 10 Tage, bevorzugt weniger als 1 Tag, insbesondere von 5 Minuten bis 12 Stunden, besonders bevorzugt höchstens 1 Stunde, insbesondere von 5 Minuten bis 1 Stunde.

Die Gelierung kann dabei ohne Wärmezuführung bei einer Temperatur im Bereich der Raumtemperatur durchgeführt werden, insbesondere von 15 bis 25°C, oder bei einer gegenüber der Raumtemperatur erhöhten Temperatur, die 20°C oder mehr beträgt, insbesondere von 25°C bis 80°C. Üblicherweise verkürzt eine höhere Gelierungstemperatur die Dauer der Gelierung. Eine höhere Gelierungstemperatur ist jedoch nicht in allen Fällen vorteilhaft, da eine erhöhte Gelierungstemperatur zu Gelen mit unzureichenden mechanischen Eigenschaften führen kann. Vorzugsweise wird die Gelierung bei einer Temperatur im Bereich der Raumtemperatur durchgeführt, insbesondere von 15°C bis 25°C.

Der Druck beim Gelieren kann in einem weiten Bereich variieren und ist im Allgemeinen nicht kritisch. Er kann beispielsweise von 0,1 bar bis 10 bar betragen, bevorzugt 0,5 bar bis 8 bar und insbesondere 0,9 bis 5 bar (jeweils absolut). Insbesondere kann man wässrige Mischungen bei Raumtemperatur und Atmosphärendruck gelieren lassen.

Während des Gelierens erstarrt die Mischung zu einem mehr oder weniger formbeständigen Gel. Daher kann man die Gelbildung in einfacher Weise daran erkennen, dass sich der Inhalt der Geliervorrichtung nicht mehr bewegt, wenn die Geliervorrichtung oder ein Behälter, mit dem eine Probe entnommen wurde, langsam schräggestellt wird. Außerdem ändern sich bei der Gelierung die akustischen Eigenschaften der Mischung: die gelierte Mischung ergibt beim Klopfen auf die äußere Wand der Geliervorrichtung einen anderen, brummenden Klang als die noch nicht gelierte Mischung (sog. Brummgel).

In einer bevorzugten Ausführungsform wird das bei der Gelierung in Schritt (b) erhaltene Gel vor der Durchführung von Schritt (c) noch einer sogenannten Alterung unterworfen, bei der sich die Ausbildung des Gels vervollständigt. Die Alterung erfolgt insbesondere dadurch, dass man das Gel einige Zeit einer höheren Temperatur aussetzt als bei der vorangegangenen Gelierung. Dazu kann man beispielsweise ein Temperierbad oder einen Wärmeschrank verwenden oder die Vorrichtung oder Umgebung, in der sich das Gel befindet, in geeigneter Weise erwärmen.

Die Temperatur bei der Alterung kann in einem weiten Bereich variieren und ist an sich nicht kritisch. Im Allgemeinen altert man bei Temperaturen von 30°C bis 150°C, bevorzugt von 40°C bis 100°C. Die Alterungs-Temperatur sollte im Bereich von 10°C bis 100°C, insbesondere von 20°C bis 80°C über der Gelierungstemperatur liegen. Wurde bei Raumtemperatur geliert, so kann man insbesondere bei Temperaturen von 40°C bis 80°C, bevorzugt bei etwa 60°C altern. Der Druck bei der Alterung ist unkritisch und beträgt üblicherweise von 0,9 bis 5 bar (absolut).

Die Dauer der Alterung ist abhängig von der Art des Gels und kann wenige Minuten dauern, aber auch lange Zeit in Anspruch nehmen. Die Dauer der Alterung kann beispielsweise bis zu 30 Tagen betragen. Üblicherweise beträgt die Dauer der Alterung von 10 Minuten bis 12 Stunden, bevorzugt von 20 Minuten bis 6 Stunden und besonders bevorzugt von 30 Minuten bis 5 Stunden.

Je nach Art und Zusammensetzung kann das Gel während der Alterung geringfügig schrumpfen und sich dabei von der Wandung der Geliervorrichtung ablösen. Vorteilhaft deckt man das Gel während der Alterung ab bzw. verschließt die Geliervorrichtung, in der sich das Gel befindet.

### Schritt (c)

Erfindungsgemäß wird in Schritt (c) das im vorigen Schritt erhaltene Gel getrocknet, vorzugsweise durch Überführung der im Gel enthaltenen Flüssigkeit in den gasförmigen Zustand bei einer Temperatur und einem Druck unterhalb der kritischen Temperatur und des kritischen Drucks der im Gel enthaltenen Flüssigkeit unter Erhalt eines Xerogels. Unter Trocknen ist die Entfernung der fluiden Phase des Gels zu verstehen.

Alternativ ist es ebenfalls möglich, das Gel unter überkritischen Bedingungen unter Erhalt eines Aerogels zu trocknen, insbesondere durch Austausch des Lösungsmittels durch eine geeignete fluide Phase, insbesondere Kohlendioxid, welche anschließend unter überkritischen Bedingungen entfernt wird.

Vorzugsweise erfolgt das Trocknen des erhaltenen Gels durch Überführung des Lösungsmittels (C) in den gasförmigen Zustand bei einer Temperatur und einem Druck unterhalb der kritischen Temperatur und des kritischen Drucks des Lösungsmittels (C). Demzufolge erfolgt vorzugsweise das Trocknen durch Entfernung des Lösungsmittels (C), das bei der Umsetzung zugegen war, ohne vorherigen Austausch gegen ein weiteres Lösungsmittel.

Folglich bringt man nach Schritt (b) das Gel bevorzugt nicht mit einer organischen Flüssigkeit in Kontakt, um das im Gel, insbesondere in den Poren des Gels, enthaltene Lösungsmittel (C), gegen diese organische Flüssigkeit auszutauschen. Dies gilt unabhängig davon, ob das Gel gealtert wird oder nicht. Indem ein Lösungsmitteltausch unterbleibt, lässt sich das Verfahren besonders einfach und kostengünstig durchführen. Sofern jedoch ein Lösungsmitteltausch durchgeführt wird, ist es bevorzugt, das Lösungsmittel (C) gegen ein unpolares Lösungsmittel auszutauschen, insbesondere gegen Kohlenwasserstoffe wie Pentan.

Für die Trocknung durch Überführung der im Gel enthaltenen Flüssigkeit, bevorzugt das Lösungsmittel (C), in den gasförmigen Zustand kommen grundsätzlich sowohl Verdunstung als auch Verdampfung, jedoch nicht die Sublimation, in Betracht. Das Trocknen durch Verdunstung oder Verdampfung schließt insbesondere das Trocknen unter Atmosphärendruck, das Trocknen im Vakuum, das Trocknen bei Raumtemperatur und das Trocknen bei erhöhter Temperatur, jedoch nicht das Gefriertrocknen, ein. Erfindungsgemäß trocknet man bei einem Druck und einer Temperatur, die unterhalb des kritischen Druckes und unterhalb der kritischen Temperatur der im Gel enthaltenen Flüssigkeit liegen. In Schritt (c) des erfindungsgemäßen Verfahrens trocknet man somit das lösungsmittelhaltige Gel, wobei als Verfahrensprodukt das organische Xerogel entsteht.

Zum Trocknen des Gels öffnet man üblicherweise die Geliervorrichtung und hält das Gel solange unter den genannten Druck- und Temperaturbedingungen, bis die flüssige Phase durch Übergang in den gasförmigen Zustand entfernt ist, d.h. man verdunstet beziehungsweise verdampft die flüssige Phase. Um das Verdunsten zu beschleunigen, ist es häufig vorteilhaft, das Gel aus dem Behälter zu entfernen. Auf diese Weise wird die Phasengrenzfläche Gel/Umgebungsluft, worüber die Verdunstung und/oder Verdampfung stattfindet, vergrößert. Beispielsweise kann man das Gel zum Trocknen auf eine ebene Unterlage oder ein Sieb geben. Als Trocknungsverfahren kommen außerdem die dem Fachmann geläufigen Trocknungsverfahren wie Konvektionstrocknung, Mikrowellentrocknung, Vakuumtrockenschränke oder Kombinationen dieser Verfahren in Betracht.

Man kann das Gel an der Luft, oder falls es sauerstoffempfindlich ist, auch an anderen Gasen wie Stickstoff oder Edelgasen trocknen, und dazu gegebenenfalls einen Trockenschrank oder andere geeignete Vorrichtungen verwenden, in denen sich der Druck, die Temperatur sowie der Lösungsmittelgehalt der Umgebung kontrollieren lässt.

Die beim Trocknen zu wählenden Temperatur- und Druckbedingungen hängen unter anderem von der Natur der im Gel vorhandenen Flüssigkeit ab. Vorzugsweise wird bei einem Druck getrocknet, der unter dem kritischen Druck pₖᵣᵢₜ der im Gel vorhanden Flüssigkeit, bevorzugt das Lösungsmittel (C) liegt, und bei einer Temperatur getrocknet, die unter der kritischen Temperatur Tₖᵣᵢₜ liegt. Man trocknet demnach unter subkritischen Bedingungen. Dabei bedeutet kritisch: beim kritischen Druck und der kritischen Temperatur ist die Dichte der flüssigen Phase gleich der Dichte der Gasphase (sog. kritische Dichte), und bei Temperaturen oberhalb Tₖᵣᵢₜ lässt sich die fluide Phase auch bei Anwendung höchster Drücke nicht mehr verflüssigen.

Setzt man als Lösungsmittel Aceton ein, so trocknet man bei Temperaturen von 0°C bis 150°C, bevorzugt 10°C bis 100°C und besonders bevorzugt 15°C bis 80°C, und bei Drücken von Hochvakuum, beispielsweise von 10⁻³ mbar, bis 5 bar, bevorzugt 1 mbar bis 3 bar und insbesondere 10 mbar bis ungefähr 1 bar (absolut). Beispielsweise kann man bei Atmosphärendruck und von 0°C bis 80°C, insbesondere bei Raumtemperatur, trocknen. Besonders bevorzugt trocknet man in Schritt (c) das Gel bei einem Druck von 0,5 bis 2 bar (absolut), und bei einer Temperatur von 0 bis 100°C.

Andere im Gel vorhandene Flüssigkeiten, insbesondere andere Lösungsmittel (C) als Aceton erfordern Anpassungen der Trocknungsbedingungen (Druck, Temperatur, Zeit), die der Fachmann durch einfache Versuche ermitteln kann.

Das Trocknen kann durch Anwendung eines Vakuums beschleunigt bzw. vervollständigt werden. Um die Trocknungswirkung weiter zu verbessern, kann man diese Vakuumtrocknung bei einer höheren Temperatur vornehmen als das Trocknen bei üblichem Druck. Beispielsweise kann man den Großteil des Lösungsmittels (C) zunächst bei Raumtemperatur und Atmosphärendruck innerhalb von 30 min bis 3 Stunden entfernen, und danach das Gel bei 40 bis 80°C unter einem Vakuum von 1 bis 100 mbar, insbesondere 5 bis 30 mbar, innerhalb von 10 min bis 6 Stunden trocknen. Selbstverständlich sind auch längere Trocknungszeiten möglich, beispielsweise von 1 bis 5 Tagen. Bevorzugt sind jedoch häufig Trocknungszeiten von unter 12 Stunden.

Statt einer solchen stufenweisen Trocknung kann man den Druck während des Trocknens auch kontinuierlich, beispielsweise linear oder exponentiell absenken, bzw. die Temperatur in solcher Weise erhöhen, d.h. gemäß eines Druck- bzw. Temperaturprogramms trocknen. Naturgemäß trocknet das Gel umso schneller, je geringer der Feuchtigkeitsgehalt der Luft ist. Gleiches gilt sinngemäß für andere flüssige Phasen als Wasser und andere Gase als Luft.

Die bevorzugten Trocknungsbedingungen hängen nicht nur vom Lösungsmittel, sondern auch von der Natur des Gels ab, insbesondere die Stabilität des Netzwerkes im Verhältnis zu den bei der Trocknung wirkenden Kapillarkräften.

Beim Trocknen in Stufe (c) wird die fluide Phase in der Regel vollständig oder bis auf einen Restgehalt von 0,01 bis 1 Gew.-%, bezogen auf das erhaltene poröse Gel, entfernt.

### Eigenschaften der porösen Gele und Verwendung

Die mit dem erfindungsgemäßen Verfahren erhältlichen porösen Gele weisen vorzugsweise einen volumengemittelten mittleren Porendurchmesser von höchstens 5 µm auf. Bevorzugt beträgt der volumengemittelte mittlere Porendurchmesser der mit dem erfindungsgemäßen Verfahren erhältlichen Xerogele von 200 nm bis 5 µm.

Der besonders bevorzugte volumengewichtete mittlere Porendurchmesser der mit dem erfindungsgemäßen Verfahren erhältlichen poröse Gele beträgt höchstens 5 µm, insbesondere höchstens 3,5 µm, ganz besonders bevorzugt höchstens 2,5 µm.

Im Allgemeinen beträgt der volumengewichtete mittlere Porendurchmesser mindestens 10 nm, vorzugsweise mindestens 50 nm. In vielen Fällen beträgt der volumengewichtete mittlere Porendurchmesser mindestens 100 nm, insbesondere mindestens 200 nm. Bevorzugt weisen die mit dem erfindungsgemäßen Verfahren erhältlichen poröse Gele eine Porosität von mindestens 70 Vol.-%, insbesondere von 70 bis 99 Vol.-%, besonders bevorzugt mindestens 80 Vol.-% auf, ganz besonders bevorzugt mindestens 85 Vol.-%, insbesondere von 85 bis 95 Vol.-%.

Die Dichte der gemäß des erfindungsgemäßen Verfahrens erhältlichen porösen Gele beträgt üblicherweise 20 bis 600 g/l, bevorzugt 50 bis 500 g/l und besonders bevorzugt 100 bis 400 g/l.

Das erfindungsgemäße Verfahren ergibt ein zusammenhängendes poröses Material und nicht nur ein Polymerpulver oder -partikel. Dabei wird die räumliche Form des resultierenden porösen Gels durch die Form des Gels bestimmt, die wiederum durch die Form der Geliervorrichtung bestimmt wird. So ergibt beispielsweise ein zylindrischer Gelierbehälter üblicherweise ein annähernd zylinderförmiges Gel, dass dann zu einem porösen Gel in Zylinderform getrocknet werden kann.

Die erfindungsgemäßen porösen Gele und die durch das erfindungsgemäße Verfahren erhältlichen porösen Gele weisen eine geringe Wärmeleitfähigkeit, eine hohe Porosität und eine geringe Dichte bei gleichzeitig hoher mechanischer Stabilität auf. Die porösen Gele weisen zudem eine geringe mittlere Porengröße auf. Die Kombination der vorgenannten Eigenschaften erlaubt den Einsatz als Dämmstoff im Bereich der thermischen Isolation, insbesondere für Anwendungen im Vakuumbereich, wo eine möglichst geringe Dicke von Vakuumplatten bevorzugt ist, beispielsweise in Kühlgeraten oder in Gebäuden. So ist die Verwendung in Vakuumisolationspaneelen, insbesondere als Kernmaterial für Vakuumisolationspaneelen, bevorzugt. Bevorzugt ist außerdem die Verwendung der erfindungsgemäßen porösen Gele als Dämmstoff.

Darüber hinaus werden durch die geringe thermische Leitfähigkeit der erfindungsgemäßen porösen Gele Anwendungen bei Drücken von 1 bis 100 mbar und insbesondere von 10 mbar bis 100 mbar möglich. Das Eigenschaftsprofil der erfindungsgemäßen porösen Gele eröffnet insbesondere Anwendungen, bei denen eine lange Lebensdauer der Vakuumpaneele gewünscht wird und die auch bei einer Druckzunahme von ungefähr 2 mbar pro Jahr noch nach vielen Jahren, beispielsweise bei einem Druck von 100 mbar, eine niedrige Wärmeleitfähigkeit aufweisen. Die erfindungsgemäßen porösen Gele und die durch das erfindungsgemäße Verfahren erhältlichen porösen Gele weisen günstige thermische Eigenschaften einerseits und günstige Materialeigenschaften wie einfache Verarbeitbarkeit und hohe mechanische Stabilität, beispielsweise geringe Brüchigkeit, andererseits auf.

### Beispiele

Die Bestimmung des Porenvolumens in ml pro g Probe und der mittleren Porengröße der Materialien erfolgte mittels Quecksilber-Porosimetrie nach DIN 66133 (1993) bei Raumtemperatur. Die mittlere Porengröße ist im Rahmen dieser Erfindung gleichzusetzen mit dem mittleren Porendurchmesser. Die Bestimmung des volumengewichteten mittleren Porendurchmessers erfolgt dabei rechnerisch aus der nach oben genannter Norm bestimmten Porengrößenverteilung.

Die Porosität in der Einheit Vol.-% wurde gemäß der Formel P = (Vᵢ / (Vᵢ + Vₛ))* 100 Vol.-% berechnet, wobei P die Porosität, Vᵢ das Hg-Intrusionsvolumen nach DIN 66133 in ml/g und Vₛ das spezifische Volumen in ml/g des Probenkörpers ist.

Die Dichte ρ des porösen Gels in der Einheit g/ml wurde gemäß der Formel p = 1 / (Vᵢ + Vₛ) berechnet. Als spezifisches Volumen wurde der Wert 1 / Vₛ = 1,38 g/ml verwendet, der durch He-Pyknometrie bestimmt wurde.

Die thermische Leitfähigkeit λ wurde mittels des dynamischen Hitzdraht-Verfahrens bestimmt. Beim Hitzdraht-Verfahren wird in die zu untersuchende Probe ein dünner Draht eingebettet, der gleichzeitig als Heizelement und Temperatursensor dient. Als Drahtmaterial wurde ein Platin-Draht mit einem Durchmesser von 100 Mikrometer und einer Länge von 40 mm eingesetzt, der zwischen zwei Hälften des jeweiligen Probenkörpers eingebettet wurde. Der Messaufbau aus Probe und Hitzdraht wurde in einen evakuierbaren Rezipienten präpariert, in dem nach dem Evakuieren der gewünschte Druck durch Belüften mit gasförmigem Stickstoff eingestellt wurde.

Während des Experiments wurde der Draht mit konstanter Leistung beheizt. Die Temperatur betrug 25°C. Die zeitliche Entwicklung des sich am Ort des Hitzdrahtes ergebenden Temperaturanstieges wurde durch Messung des Widerstandes erfasst. Die Wärmeleitfähigkeit wurde durch Anpassung einer analytischen Lösung unter Berücksichtigung eines thermischen Kontaktwiderstandes zwischen Probe und Draht sowie axialer Wärmeverluste an die zeitliche Temperaturentwicklung gemäß H.-P. Ebert et al., High Temp.-High. Press, 1993, 25, 391-401 bestimmt. Die Bestimmung des Gasdrucks erfolgte mit zwei kapazitiven Drucksensoren mit unterschiedlichen Messbereichen (0,1 bis 1000 mbar und 0,001 bis 10 mbar).

Es wurden-folgende Verbindungen eingesetzt:
a-1: oligomeres MDI (Lupranat® M50) mit einem NCO-Gehalt von 31,5 g pro 100 g nach ASTM D-5155-96 A, einer Funktionalität im Bereich von 2,8 bis 2,9 und einer Viskosität von 550 mPa.s bei 25°C nach DIN 53018.
a-2: oligomeres Diaminodiphenylmethan mit einer Viskosität von 2710 mPa.s bei 50°C nach DIN 53018, einer Funktionalität im Bereich von 2,4 und einer potentiometrisch bestimmten Aminzahl von ungefähr 560 mg KOH / g.
a-3: Polyethylenimin mit einem Wassergehalt von weniger als 1 Gew.-%, einer Viskosität bei 20°C von 200.000 mPa*s, einer Ladungsdichte bei pH 4,5 von 17 meq/g bezogen auf 100 Gew.-% a-3, einem Verhältnis von Aminogruppen prim/sek/tert von 1/1,2/0,76 und einem Molekulargewicht (Mw) von 25.000 g/mol.
a-4: oligomeres MDI (Lupranat® M200) mit einem NCO-Gehalt von 30,9 g pro 100 g nach ASTM D-5155-96 A, einer Funktionalität im Bereich von drei und einer Viskosität von 2100 mPa.s bei 25°C nach DIN 53018.

### Beispiel 1

2,4 g der Verbindung a-1 wurden unter Rühren bei 20°C in 10,5 g Aceton in einem Becherglas gelöst. 1,3 g der Verbindung a-2 und 0,1 g der Verbindung a-3 wurden in 11 g Aceton in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Das erhaltene Material hatte eine Porosität von 87 Vol.-% mit einer entsprechenden Dichte von 170 g/l.

### Beispiel 1 V

2,4 g der Verbindung a-1 wurden unter Rühren bei 20°C in 10,5 g Aceton in einem Becherglas gelöst. 1,3 g der Verbindung a-2 wurden in 11 g Aceton in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Das erhaltene Material wies im Vergleich zu Beispiel 1 eine deutlich geschrumpfte Form auf. Die Porosität betrug 71 Vol.-% mit einer entsprechenden Dichte von 390 g/l.

### Beispiel 2

40 g der Verbindung a-4 wurden unter Rühren bei 20°C in 212 g Aceton in einem Becherglas gelöst. 25 g der Verbindung a-2 und 0,4 g Verbindung a-3 wurden in 216,8 g Aceton in einem zweiten Becherglas gelöst. Die beiden Lösungen aus Schritt (a) wurden gemischt. Es fand eine sofortige Reaktion statt. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Das erhaltene Material hatte eine Porosität von 87 Vol.-% mit einer entsprechenden Dichte von 170 g/l.

Das erhaltene material wies eine Wärmeleitfähigkeit von 35 mW/m*K bei einem Druck von 1013 mbar und 4,6 mW/m*K bei einem Druck von 0,037 mbar auf.

### Beispiel 3

2,4 g der Verbindung a-1 wurden unter Rühren bei 20°C in 10,5 g Aceton in einem Becherglas gelöst. 1,3 g der Verbindung a-2 und 0,1 g Triethylendiamin wurden in 11 g Aceton in einem zweiten Becherglas gelöst. Die beiden Lösungen aus Schritt (a) wurden gemischt. Es fand eine sofortige Reaktion statt. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20°C entfernt.

Das erhaltene Material wies im Vergleich zu Beispiel 1 eine deutlich geschrumpfte Form auf. Die Porosität betrug 74 Vol.-% mit einer entsprechenden Dichte von 350 g/l.

## Patentansprüche

1. Poröses Gel enthaltend folgende Komponenten in umgesetzter Form:
(a1) mindestens ein mehrfunktionelles Isocyanat,
(a2) mindestens ein mehrfunktionelles aromatisches Amin ausgewählt aus 4,4'-Diaminodi-phenylmethan, 2,4'-Diaminodiphenylmethan, 2,2'-Diaminodiphenylmethan und oligomerem Diaminodiphenylmethan, und
(a3) mindestens ein Polyalkylenpolyamin.

2. Poröses Gel nach Anspruch 1, enthaltend folgende Komponenten in umgesetzter Form:
(a1) von 30 bis 90 Gew.-% mindestens ein mehrfunktionelles Isocyanat,
(a2) von 9.99 bis 66 Gew.-% mindestens ein mehrfunktionelles aromatisches Amin und
(a3) von 0,01 bis 4 Gel.-% mindestens ein Polyalkylenpolyamin,
wobei die Summe der Gew.-% der Komponenten (a1) bis (a3) bezogen auf das Gesamtgewicht der Komponenten (a1), (a2) und (a3) 100 Gew.-% ergibt.

3. Poröses Gel nach Anspruch 1 oder 2, wobei Komponente (a3) ein hochverzweigtes Polyalkylenpolyamin ist.

4. Poröses Gel nach einem oder mehreren der Ansprüche 1 bis 3, wobei das poröse Gel ein Xerogel ist.

5. Poröses Gel nach einem oder mehreren der Ansprüche 1 bis 4, wobei Komponente (a3) ein Polyethylenimin ist.

6. Poröses Gel nach einem oder mehreren der Ansprüche 1 bis 5, wobei die Komponente (a2) oligomeres Diaminodiphenylmethan enthält und eine Funktionalität von mindestens 2,3 aufweist.

7. Poröses Gel nach einem oder mehreren der Ansprüche 1 bis 6, wobei die Komponente (a1) aus mindestens einem mehrfunktionellen isocyanat ausgewählt aus Diphenylmethan-4,4'-diisocyanat, Diphenylmethan-2,4'-diisocyanat, Diphenylmethan-2,2'-diiso-cyanat und oligomerem Diphenylmethandiisocyanat besteht.

8. Poröses Gel nach einem oder mehreren der Ansprüche 1 bis 7, wobei Komponente (a1) oligomeres Diphenylmethandiisocyanat enthält und eine Funktionalität von mindestens 2,5 aufweist.

9. Poröses Gel nach einem oder mehreren der Ansprüche 1 bis 8. wobei Komponente (a1) oligomeres Diphenylmethandiisocyanat und Komponente (a2) oligomeres Diaminodiphenylmethan enthält und die Summe aus der Funktionalität der Komponente (a1) und der Funktionalität der Komponente (a2) mindestens 5,5 beträgt.

10. Poröses Gel nach einem oder mehreren der Ansprüche 1 bis 9, wobei der volumengewichtete mittlere Porendurchmesser des porösen Materials höchstens 3 µm beträgt.

11. Verfahren zur Herstellung von porösen Gelen gemäß einem oder mehreren der Ansprüche 1 bis 10, umfassend
(a) Bereitstellen der Komponente (a1) und getrennt davon der Komponenten (a2) und (a3) wie in einem oder mehreren der Ansprüche 1 bis 10 definiert jeweils in einem Lösungsmittel (C);
(b) Umsetzung der Komponenten (a1) bis (a3) in Gegenwart des Lösungsmittels (C) zu einem Gel;
(c) Trocknen des im vorigen Schritt erhaltenen Gels.

12. Verfahren nach Anspruch 1-1, wobei das Trocknen des erhaltenen Gels durch Überführung des Lösungsmittels (C) in den gasförmigen Zustand bei einer Temperatur und einem Druck unterhalb der kritischen Temperatur und des kritischen Drucks des Lösungsmittels (C) erfolgt.

13. Poröses Gel erhältlich gemäß den Ansprüchen 11 oder 12.

14. Verwendung von porösen Gelen gemäß einem oder mehreren der Ansprüche 1 bis 10 oder von porösen Gelen gemäß Anspruch 13 als Dämmstoff.

15. Verwendung von porösen Gelen gemäß einem oder mehreren der Ansprüche 1 bis 10 oder von porösen Gelen gemäß Anspruch 13 für Vakuumisolationspaneele.

## Claims

1. A porous gel comprising the following components, in reacted form:
(a1) at least one polyfunctional isocyanate,
(a2) at least one polyfunctional aromatic amine selected from 4,4'-diaminodiphenylmethane, 2,4'-diaminodiphenylmethane, 2,2'-diaminodiphenylmethane and oligomeric diaminodiphenylmethane, and
(a3) at least one polyalkylenepolyamine.

2. The porous gel according to claim 1, comprising the following components, in reacted form:
(a1) from 30 to 90% by weight of at least one polyfunctional isocyanate,
(a2) from 9.99 to 66% by weight of at least one polyfunctional aromatic amine and
(a3) from 0.01 to 4% by weight of at least one polyalkylenepolyamine,
where the sum of the percentages by weight of components (a1) to (a3), based on the total weight of components (a1), (a2) and (a3), adds up to 100% by weight.

3. The porous gel according to claim 1 or 2, wherein component (a3) is a highly branched polyalkylenepolyamine.

4. The porous gel according to one or more of claims 1 to 3, wherein the porous gel is a xerogel.

5. The porous gel according to one or more of claims 1 to 4, wherein component (a3) is a polyethyleneimine.

6. The porous gel according to one or more of claims 1 to 5, wherein component (a2) comprises oligomeric diaminodiphenylmethane and has a functionality of at least 2.3.

7. The porous gel according to one or more of claims 1 to 6, wherein component (a1) consists of at least one polyfunctional isocyanate selected from diphenylmethane 4,4'-diisocyanate, diphenylmethane 2,4'-diisocyanate, diphenylmethane 2,2'-diisocyanate and oligomeric diphenylmethane diisocyanate.

8. The porous gel according to one or more of claims 1 to 7, wherein component (a1) comprises oligomeric diphenylmethane diisocyanate and has a functionality of at least 2.5.

9. The porous gel according to one or more of claims 1 to 8, wherein component (a1) comprises oligomeric diphenylmethane diisocyanate and component (a2) comprises oligomeric diaminodiphenylmethane, and the sum of the functionality of component (a1) and of the functionality of component (a2) is at least 5.5.

10. The porous gel according to one or more of claims 1 to 9, wherein the volume-weighted mean pore diameter of the porous material is at most 3 µm.

11. A process for preparing porous gels according to one or more of claims 1 to 10, comprising
(a) providing component (a1) and, separately therefrom, components (a2) and (a3) as defined in one or more of claims 1 to 10, each in a solvent (C);
(b) converting components (a1) to (a3) in the presence of the solvent (C) to a gel;
(c) drying the gel obtained in the previous step.

12. The process according to claim 11, wherein the resulting gel is dried by converting the solvent (C) to the gaseous state at a temperature and a pressure below the critical temperature and the critical pressure of the solvent (C).

13. A porous gel obtainable according to claim 11 or 12.

14. The use of porous gels according to one or more of claims 1 to 10 or of porous gels according to claim 13 as an insulating material.

15. The use of porous gels according to one or more of claims 1 to 10 or of porous gels according to claim 13 for vacuum insulation panels.

## Revendications

1. Gel poreux contenant les composants suivants, sous forme ayant réagi :
(a1) au moins un isocyanate polyfonctionnel,
(a2) au moins une amine aromatique polyfonctionnelle, choisie parmi le 4,4'-diaminodiphénylméthane, le 2,4'-diaminodiphénylméthane, le 2,2'-diaminodiphénylméthane et un diaminodiphénylméthane oligomère, et
(a3) au moins une polyalkylènepolyamine.

2. Gel poreux selon la revendication 1, contenant les composants suivants, sous forme ayant réagi :
(a1) de 30 à 90 % en poids d'au moins un isocyanate polyfonctionnel,
(a2) de 9,99 à 66 % en poids d'au moins une amine aromatique polyfonctionnelle, et
(a3) de 0,01 à 4 % en poids d'au moins une polyalkylènepolyamine,
la somme des % en poids des composants (a1) à (a3), par rapport au poids total des composants (a1), (a2) et (a3), étant égale à 100 % en poids.

3. Gel poreux selon la revendication 1 ou 2, dans lequel le composant (a3) est une polyalkylènepolyamine hautement ramifiée.

4. Gel poreux selon une ou plusieurs des revendications 1 à 3, le gel poreux étant un xérogel.

5. Gel poreux selon une ou plusieurs des revendications 1 à 4, dans lequel le composant (a3) est une polyéthylène-imine.

6. Gel poreux selon une ou plusieurs des revendications 1 à 5, dans lequel le composant (a2) contient un diaminodiphénylméthane oligomère et présente une fonctionnalité d'au moins 2,3.

7. Gel poreux selon une ou plusieurs des revendications 1 à 6, dans lequel le composant (a1) consiste en au moins un isocyanate polyfonctionnel choisi parmi le diphénylméthane-4,4'-diisocyanate, le diphénylméthane-2,4'-diisocyanate, le diphénylméthane-2,2'-diisocyanate et un diphénylméthane-diisocyanate oligomère.

8. Gel poreux selon une ou plusieurs des revendications 1 à 7, dans lequel le composant (a1) contient un diphénylméthane-diisocyanate oligomère et présente une fonctionnalité d'au moins 2,5.

9. Gel poreux selon une ou plusieurs des revendications 1 à 8, dans lequel le composant (a1) contient un diphénylméthane-diisocyanate oligomère et le composant (a2) contient un diaminodiphénylméthane oligomère et la somme de la fonctionnalité du composant (a1) et de la fonctionnalité du composant (a2) vaut au moins 5,5.

10. Gel poreux selon une ou plusieurs des revendications 1 à 9, dans lequel le diamètre moyen de pore, pondéré en volume, du matériau poreux est au maximum de 3 µm.

11. Procédé pour la préparation de gels poreux selon une ou plusieurs des revendications 1 à 10, comprenant
(a) disposition du composant (a1) et, séparément de celui-ci, des composants (a2) et (a3), tels que définis dans une ou plusieurs des revendications 1 à 10, chacun dans un solvant (C) ;
(b) mise en réaction des composants (a1) à (a3) en présence du solvant (C), pour l'obtention d'un gel ;
(c) séchage du gel obtenu dans l'étape précédente.

12. Procédé selon la revendication 11, dans lequel le séchage du gel obtenu s'effectue par conversion à l'état gazeux du solvant (C), à une température et sous une pression inférieures à la température critique et à la pression critique du solvant (C).

13. Gel poreux pouvant être obtenu selon la revendication 11 ou 12.

14. Utilisation de gel poreux selon une ou plusieurs des revendications 1 à 10 ou de gels poreux selon la revendication 13, en tant que matériau isolant.

15. Utilisation de gels poreux selon une ou plusieurs des revendications 1 à 10 ou de gels poreux selon la revendication 13, pour des panneaux isolants sous vide.
